# FASCICULE DE BREVET EUROPEEN

(11) **EP 2 689 524 B1**
(45) Date de publication et mention de la délivrance du brevet: **18.09.2019**
(21) Numéro de dépôt: 12717351.6
(22) Date de dépôt: 21.03.2012
(51) Int. Cl.: H02M 7/219, H02M 1/42

(54) **PROCEDE DE COMMANDE SIMPLIFIE D'UN CONVERTISSEUR DE TENSION ALTERNATIVE TRIPHASEE EN TENSION CONTINUE**
VEREINFACHTES VERFAHREN ZUR STEUERUNG EINES DREIPHASIGEN AC-DC-WANDLERS
SIMPLIFIED CONTROL METHOD FOR A THREE-PHASE AC-DC CONVERTER

(30) Priorité: 21.03.2011 FR 1152332
(43) Date de publication de la demande: 29.01.2014
(73) Titulaire: Safran Electrical & Power, 31702 Blagnac Cedex (FR)
(72) Inventeur: BALPE, Cédric, F-91800 Brunoy (FR)
(74) Mandataire: Camus, Olivier Jean-Claude
(86) Numéro de dépôt international: PCT/FR2012/050593
(87) Numéro de publication internationale: WO 2012/127170

(56) Documents cités:
- NUSSBAUMER T ET AL: "Advanced modulation scheme for three-phase three-switch buck-type pwm rectifier preventing mains current distortion originating from sliding input filter capacitor voltage intersections", PESC'03. 2003 IEEE 34TH. ANNUAL POWER ELECTRONICS SPECIALISTS CONFERENCE. CONFERENCE PROCEEDINGS. ACAPULCO, MEXICO, JUNE 15 - 19, 2003; [ANNUAL POWER ELECTRONICS SPECIALISTS CONFERENCE], NEW YORK, NY :; IEEE, US, vol. 3, 15 juin 2003 (2003-06-15), pages 1086-1091, XP010647629, DOI: 10.1109/PESC.2003.1216601 ISBN: 978-0-7803-7754-7
- PIRES V F ET AL: "Space-vector /spl alpha/-/spl beta/ modulator and sliding mode control of the three-phase buck type rectifier with freewheeling diode", IECON-2002. PROCEEDINGS OF THE 28TH. ANNUAL CONFERENCE OF THE IEEE INDUSTRIAL ELECTRONICS SOCIETY. SEVILLA, SPAIN, NOV. 5 - 8, 2002; [ANNUAL CONFERENCE OF THE IEEE INDUSTRIAL ELECTRONICS SOCIETY], IEEE, NEW YORK,NY, US, vol. 1, 5 novembre 2002 (2002-11-05), pages 341-346, XP010633181, DOI: 10.1109/IECON.2002.1187532 ISBN: 978-0-7803-7474-4
- NISHIDA Y ET AL: "A new instantaneous-current controller for three-phase buck-boost and buck converters with PFC operation", APPLIED POWER ELECTRONICS CONFERENCE AND EXPOSITION, 1995. APEC '95. C ONFERENCE PROCEEDINGS 1995., TENTH ANNUAL DALLAS, TX, USA 5-9 MARCH 1995, NEW YORK, NY, USA,IEEE, US, 5 mars 1995 (1995-03-05), pages 875-883, XP010147678, DOI: 10.1109/APEC.1995.469044 ISBN: 978-0-7803-2482-4

## Description

### DOMAINE TECHNIQUE

La présente invention se rapporte à un procédé de commande d'un convertisseur de tension alternative triphasée en tension continue.

### ETAT DE LA TECHNIQUE ANTERIEUR

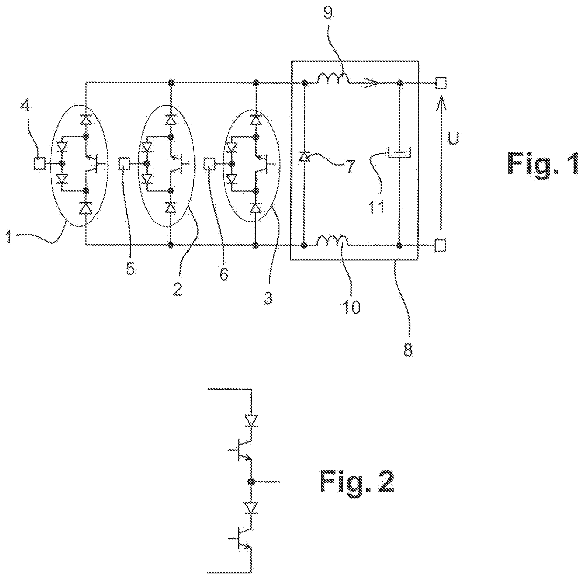

La figure 1 représente un convertisseur de type « buck triphasé » qui permet de convertir une tension alternative triphasée en tension continue. Ce convertisseur comporte trois interrupteurs 1, 2, 3 auxquels sont reliés chacune des phases 4, 5, 6 de la tension alternative triphasée. Les trois interrupteurs 1, 2, 3 sont reliés en parallèle entre eux. Le convertisseur buck triphasé comporte également une diode de roue libre 7 reliée en antiparallèle sur le bus DC ainsi un filtre de sortie 8 comportant deux inductances 9, 10 et un condensateur 11.

La diode de roue libre permet une continuité du courant lorsque les interrupteurs du montage sont ouverts. Cela est indispensable quand le courant circule dans des inductances comme c'est le cas ici car il ne faut pas interrompre soudainement le courant dans une inductance.

Généralement, pour commander un tel convertisseur, l'art antérieur propose de mesurer les tensions et les courants en entrée de chaque interrupteur 1, 2, 3 ainsi que la tension et le courant en sortie du convertisseur, et d'utiliser des boucles de régulation permettant de régler le temps de conduction moyen des interrupteurs 1, 2, 3 en fonction des tensions et des courants d'entrée et de sortie.

De tels procédés permettent un bon contrôle de la tension de sortie. En outre, ils permettent de réguler le niveau de tension de la tension continue. Ils permettent également de contrôler la mise sous tension du convertisseur en limitant l'appel de courant.

Toutefois, ces procédés sont très complexes et ils nécessitent de nombreux capteurs.

En outre, les procédés d'asservissement des tensions aux courants dans les procédés de l'art antérieur sont très complexes, ils nécessitent des logiciels de commande très lourds et des capteurs de tensions et de courants très précis.

Par ailleurs, il est connu de l'état de la technique le document NUSSBAUMER T ET AL, Advanced modulation scheme for three-phase three-switch buck-type PWM rectifier preventing mains current distortion originating from sliding input filter capacitor voltage intersections, IEEE, US, vol. 3, 15 juin 2003, pages 1086-1091.

### EXPOSE DE L'INVENTION

L'invention est décrite dans l'ensemble des revendications jointes en annexe. Les représentations et/ou exemples de la description suivante qui ne sont pas couverts par les revendications jointes en annexe sont considérés comme ne faisant pas partie de la présente invention.

L'invention vise à remédier aux inconvénients de l'état de la technique en proposant un procédé de commande d'un convertisseur de tension alternative triphasée en tension continue qui soit plus simple que les procédés de l'art antérieur.

Un autre objet de l'invention est de proposer un procédé de commande d'un convertisseur de tension alternatif triphasé en tension continue simplifié mais qui présente des performances acceptables, c'est-à-dire qui permette d'assurer correctement la conversion alternative triphasée en continu, et qui permette de rejeter des courants sur le réseau alternatif dont le contenu harmonique est conforme aux normes de réseaux électriques.

Pour cela, est proposé, selon un premier aspect de l'invention, un procédé de commande d'un convertisseur de tension d'entrée alternative à n phases en une tension de sortie continue, chaque phase de la tension d'entrée alternative étant reliée à un interrupteur du convertisseur, le procédé comportant les étapes suivantes:
- (a) Une étape de détermination des signes de j tensions caractéristiques;
- (b) Une étape de détermination d'une combinaison de référence à laquelle correspondent les signes des j tensions caractéristiques par la comparaison des signes de ces j tensions caractéristiques aux données d'une table de référence ;
- (c) Une étape d'ouverture de chaque interrupteur pendant un temps d'ouverture prédéterminé en fonction de la combinaison de référence identifiée lors de l'étape (b).

Ainsi, le procédé selon l'invention est particulièrement avantageux en ce que, au lieu d'asservir en temps réel les interrupteurs en fonction des tensions et des courants mesurés en entrée et en sortie du convertisseur, le procédé selon l'invention se contente de mesurer des tensions caractéristiques de façon suffisamment précise pour déterminer le signe de ces tensions caractéristiques. Le procédé détermine une combinaison de référence à laquelle correspondent les signes de ces j tensions caractéristiques.

Les temps d'ouverture ou les rapports cycliques des interrupteurs sont ensuite commandés en fonction de la combinaison de référence identifiée.

Le procédé est donc beaucoup plus simple que les procédés de l'art antérieur, tout d'abord parce que la mesure des tensions caractéristiques n'a pas besoin d'être aussi précise que dans les procédés de l'art antérieur, puisque la valeur exacte de la tension n'est pas nécessaire : seul son signe est nécessaire.

En outre, le procédé selon l'invention est simplifié par rapport aux procédés de l'art antérieur car contrairement aux procédés de l'art antérieur, dans le procédé selon l'invention, les intensités des phases de la tension alternative en entrée du convertisseur n'ont plus besoin d'être mesurées. La tension et le courant de la tension de sortie n'ont plus non plus besoin d'être mesurés.

Par ailleurs, les temps d'ouverture des interrupteurs n'ont plus besoin d'être régulés à tout instant t en fonction des amplitudes des tensions et des intensités mesurées. Au contraire, les temps d'ouverture des interrupteurs sont prédéterminés, et à une combinaison de référence donnée, correspondent toujours les mêmes temps d'ouverture de chacun des interrupteurs.

Le procédé de commande selon l'invention peut également présenter une ou plusieurs des caractéristiques ci-après, prises isolément ou selon toutes les combinaisons techniquement possibles.

La table de référence contient de préférence i combinaisons de référence différentes. Ainsi, la table de référence comporte de préférence un nombre déterminé de combinaisons de référence, de sorte que les j signes des tensions caractéristiques sont comparées aux données de la table de référence de manière à déterminer la combinaison de référence à laquelle correspond la combinaison des j signes des tensions caractéristiques.

En d'autres termes, chaque combinaison de référence est caractérisée par un ensemble de j signes de tensions caractéristiques donc une fois que les j signes de tensions caractéristiques sont déterminés, on compare ces j signes de référence avec les données de la table de référence de façon à déterminer à quelle combinaison de référence ces j signes de tensions caractéristiques correspondent.

Avantageusement, j est égal à i/2. En effet, j doit être choisi de façon à ce que le nombre de signes de tensions caractéristiques soit tel que chaque combinaison de j signes de tensions caractéristiques corresponde à une et une seule combinaison de référence de la table de référence.

Selon différents modes de réalisation préférentiels, i peut être égal à 12 ou 18 lorsque n est égal à 3. En effet, comme ce sera expliqué plus en détail dans la partie description détaillée d'au moins un mode de réalisation, dans le cas où 12 ou 18 combinaisons de référence sont choisies, il est particulièrement facile de déterminer un ensemble de signes de tensions caractéristiques de façon à ce qu'un ensemble de signe caractéristiques corresponde à une et une seule combinaison de référence.

Toutefois, l'homme du métier saurait aisément adapter le procédé au cas où i est égal à un autre nombre. De manière générale, plus i est grand, plus le procédé de commande est précis.

Avantageusement, i est un multiple du nombre de phases n de la tension d'entrée alternative.

Selon un mode de réalisation, lors de l'étape (a), les six signes suivants sont déterminés:
- le signe de la tension de chacune des phases ;
- le signe des différences entre deux des tensions des phases.

Ainsi, dans ce mode de réalisation, qui correspond au cas où il existe douze combinaisons de référence, on détermine le signe des tensions des phases, ainsi que le signe de leurs différences.

Selon un autre mode de réalisation, lors de l'étape (a), les neuf signes suivants sont déterminés :
- Le signe de la tension de chacune des phases;
- Le signe de la tension de chacune des phases déphasée de +20°.
- Le signe de la tension de chacune des phases déphasée de -20°.

Pour une tension U(t) de période T, on appelle « tension déphasée de +20° », une tension qui est égale à U(t + T/18). De la même manière, une tension U(t) de période T, on appelle « tension déphasée de -20° », une tension qui est égale à U(t - T/18).

L'étape (a) de détermination du signe de j tensions caractéristiques est de préférence une étape de mesure du signe de ces j tensions. En d'autres termes, cette étape (a) est de préférence une étape de mesure de la valeur de chacune de ces tensions caractéristiques, cette étape de mesure devant juste être assez précise pour permettre la détermination du signe de ces j tensions.

Avantageusement, chaque combinaison de référence est représentative d'un intervalle de temps.

Chaque intervalle de temps correspond de préférence à une fraction de la période de la tension d'entrée alternative.

Avantageusement, tous les intervalles de temps présentent la même durée lorsque le réseau électrique est équilibré.

Le procédé est de préférence répété une fois par intervalle de temps, ce qui permet de le simplifier par rapport aux procédés de l'art antérieur qui eux ont lieu en permanence.

Avantageusement, le procédé de commande est un procédé de commande d'un convertisseur de type « buck triphasé ». Un tel convertisseur est par exemple décrit dans le document intitulé « Comprehensive Design of a Three-Phase Three-Switch Buck-Type PWM Rectifier» de Thomas Nussbaumer, Member, IEEE, Martina Baumann, and Johann W. Kolar, Senior Member, IEEE, IEEE TRANSACTIONS ON POWER ELECTRONICS, VOL. 22, NO. 2, MARCH 2007.

Avantageusement, le procédé de commande est un procédé de commande d'un convertisseur de type « boost ». Un tel convertisseur est par exemple décrit dans le document intitulé « Space Vector Based Analysis of the Variation and Control of the Neutral Point Potential of Hysteresis Current Controlled Three-Phase/Switch/Level PWM Rectifier Systems", ∼ O H A N NW . KOLAR,U WED ROFENIKF,R ANZC . ZACH, Technical University Vienna, Power Electronics Section 359.5, GusshausstraDe 27, Vienna A-1040, Austria/Europe, IEEE Catalogue No. 95TH8025 0-7803-2423-4I95I$4.oOOI995 IEEE.

Pour mettre en oeuvre le procédé selon l'invention, une table de référence doit avoir été préalablement réalisée. Dans ce document, on appelle « table de référence » des données de référence stockées en mémoire et auxquelles sont comparés les signes déterminés lors de l'étape (a) de façon à identifier la combinaison de référence à laquelle correspondent ces signes. A chaque combinaison de référence correspondent des temps d'ouverture prédéterminés ou des rapports cycliques des interrupteurs.

Pour mettre en oeuvre le procédé selon l'invention, une table de référence doit donc avoir été établie.

Pour cela, on peut par exemple réaliser un gabarit dans lequel les tensions des n phases sont enregistrées simultanément. On découpe ensuite ce gabarit en i intervalles de temps.

On identifie ensuite j tensions caractéristiques de sorte qu'à chaque intervalle de temps, corresponde une combinaison de signes de tensions caractéristiques et une seule. Par ailleurs, pour chaque intervalle de temps, on détermine un temps d'ouverture moyen ou un rapport cyclique moyen de chacun des interrupteurs de sorte qu'en appliquant ces temps d'ouverture ou ces rapports cycliques moyens pendant chaque intervalle de temps on obtienne en sortie du convertisseur une tension continue.

La table de référence ainsi réalisée comprend donc i intervalles de temps, chaque intervalle de temps étant caractérisé par une combinaison unique de j signes de tension caractéristiques. Par ailleurs, à chaque intervalle de temps est associé un temps d'ouverture prédéterminé ou un rapport cyclique prédéterminé pour chacun des interrupteurs.

Par conséquent, une fois qu'une telle table de référence a été réalisée, à un instant t donné, on détermine j signes de tensions caractéristiques pour la tension alternative en entrée du convertisseur, puis on les compare avec les j signes de tensions caractéristiques de la table de référence de manière à déterminer la combinaison de référence à laquelle correspondent ces j signes de référence. Une fois la combinaison de référence déterminée, on ouvre les interrupteurs pendant les durées prédéterminées qui correspondent à cette combinaison de référence.

### BREVES DESCRIPTION DES FIGURES

D'autres caractéristiques et avantages de l'invention ressortiront à la lecture de la description détaillée qui suit, en référence aux figures annexées, qui illustrent :
- La figure 1, une représentation schématique d'un convertisseur, de la famille back, d'une tension d'entrée alternative triphasée en une tension de sortie continue auquel s'applique un procédé de commande selon l'invention ;
- La figure 2, un interrupteur que pourrait comprendre le convertisseur de la figure 1 à la place des interrupteurs 1 à 3 représentés sur la figure 1 ;
- La figure 3, une représentation schématique d'un gabarit permettant de réaliser une table de référence utilisée dans un procédé de commande selon un mode de réalisation de l'invention dans lequel 12 combinaisons de référence sont utilisées ;
- La figure 4, une représentation schématique des signes de six tensions caractéristiques de référence utilisées dans un procédé selon le mode de réalisation de la figure 3 ;
- La figure 5, une représentation schématique de l'évolution dans le temps des six tensions caractéristiques relatives au convertisseur de la figure 1 ;
- La figure 6, une représentation schématique des durées d'ouverture moyennes des interrupteurs du convertisseur de la figure 1 durant une tranche de temps ;
- La figure 7, une représentation schématique d'un convertisseur buck d'une tension d'entrée alternative triphasée en une tension de sortie continue auquel s'applique un procédé de commande selon l'invention ;
- La figure 8, une représentation schématique d'un gabarit permettant de réaliser une table de référence utilisée dans un procédé de commande selon un mode de réalisation de l'invention dans lequel 18 combinaisons de référence sont utilisées ;
- La figure 9, une représentation schématique des signes de neuf tensions caractéristiques de référence utilisées dans un procédé selon le mode de réalisation de la figure 8 ;
- La figure 10, une représentation schématique de l'évolution dans le temps des neuf tensions caractéristiques relatives au convertisseur de la figure 1 ;
- La figure 11, une représentation schématique d'un convertisseur ;
- La figure 12, une représentation schématique d'un convertisseur boost ;
- La figure 13, une représentation schématique d'un convertisseur buck.

### DESCRIPTION DETAILLEE D'AU MOINS UN MODE DE REALISATION

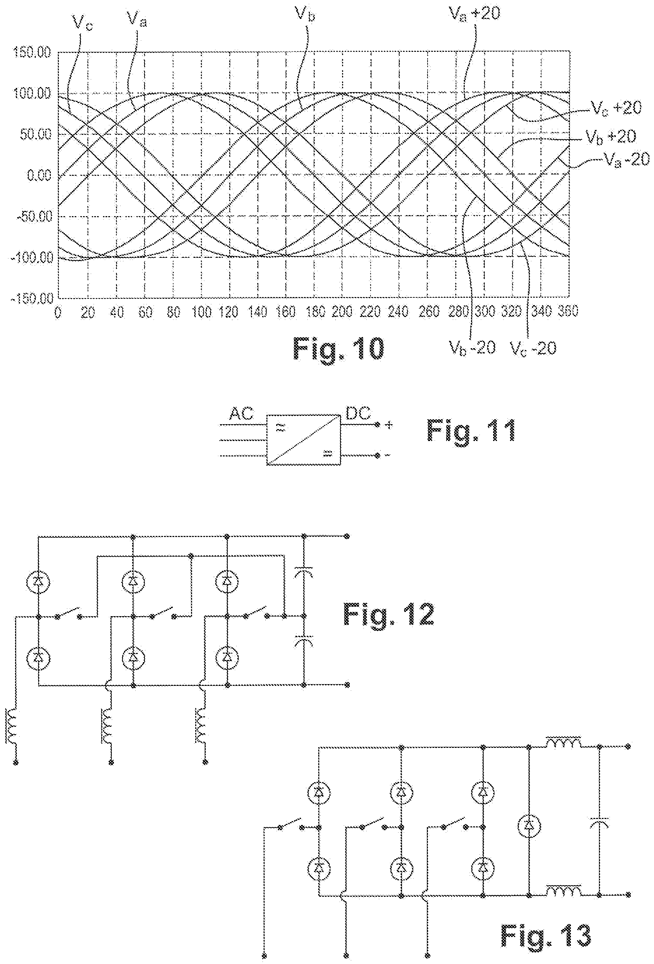

La figure 1 représente un convertisseur qui permet de convertir une tension d'entrée alternative triphasée en une tension de sortie continue. La figure 11 représente le symbole d'un convertisseur. Le convertisseur de la figure 1 est appelé « convertisseur buck triphasé ». Le procédé de commande s'applique par exemple à ce convertisseur. La figure 13 représente un schéma de principe d'un convertisseur buck auquel peut s'appliquer l'invention.

Toutefois, l'invention n'est pas limitée à ce type de convertisseur. Le procédé de commande selon l'invention pourrait par exemple s'appliquer à des convertisseurs de type « boost ». La figure 12 représente un schéma de principe d'un convertisseur boost. En outre, l'invention n'est pas limitée aux convertisseurs de tension triphasée, et elle peut être utilisée pour des convertisseurs de tensions à n phases en une tension continue.

Le convertisseur de la figure 1 comporte trois interrupteurs 1, 2, 3 auxquels sont reliés chacune des phases 4, 5, 6 de la tension d'entrée alternative triphasée. Les trois interrupteurs 1, 2, 3 sont reliés en parallèle entre eux. Le convertisseur comporte également une diode de roue libre 7 reliée en antiparallèle sur le bus DC ainsi qu'un filtre de sortie 8 comportant deux inductances 9, 10 et un condensateur 11.

Dans le mode de réalisation de la figure 1, chaque interrupteur 1, 2, 3 est constitué par de quatre diodes et d'un transistor. Le transistor peut être de type IGBT, MOSFET, FET.

Toutefois, le procédé de commande selon l'invention pourrait également s'appliquer à un convertisseur d'une tension alternative à n phases en une tension de sortie continue qui présente une composition différente. Ainsi, les interrupteurs de la figure 1 pourraient être remplacés par d'autres interrupteurs, par exemple par des interrupteurs semblables à celui représenté sur la figure 2.

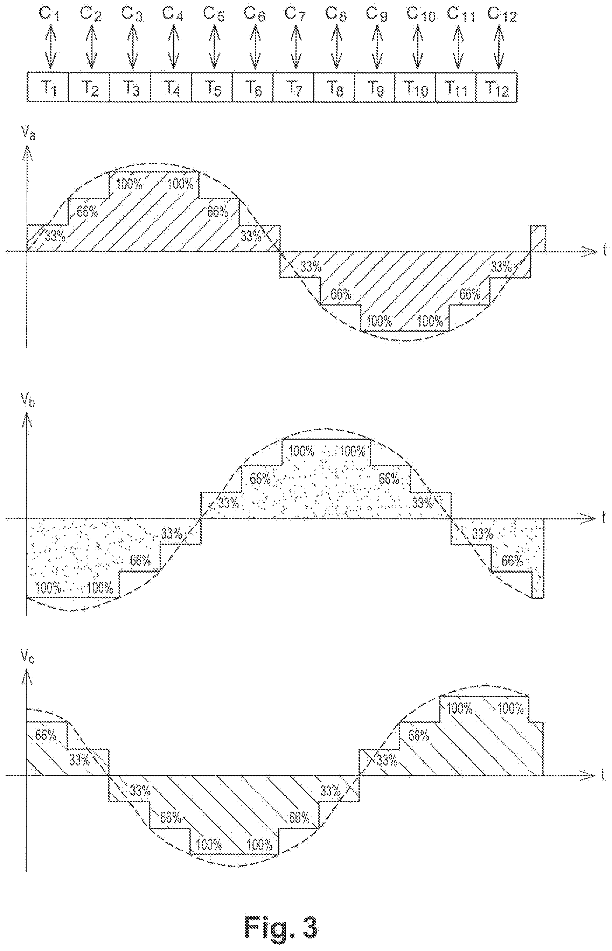

Un procédé de commande d'un convertisseur d'une tension d'entrée alternative triphasé en une tension de sortie continue selon un premier mode de réalisation de l'invention va maintenant être décrit en détail en référence aux figures 3 à 6.

Tout d'abord, préalablement à la mise en oeuvre du procédé de commande, une table de référence doit être réalisée. Pour cela, dans ce mode de réalisation, on mesure et/ ou enregistre les tensions Va, Vb, Vc en entrée du convertisseur en fonction du temps t pendant une période T.

Cette période T est découpée, dans ce mode de réalisation, en i=12 intervalles de temps T1 à T12. Toutefois, on pourrait également envisager de diviser cette période en un autre nombre d'intervalles de temps. Le nombre d'intervalles de temps i doit de préférence être un multiple du nombre de phases n de la tension d'entrée alternative. Dans cet exemple, le nombre d'intervalles de temps i est donc de préférence un multiple de 3.

Les intervalles de temps T1 à T12 sont de préférence de même durée, ce qui signifie que dans le cas présent, chaque intervalle de temps T1 à T12 dure de préférence T/12.

Ensuite, la table de référence doit comprendre des données permettant d'identifier de manière unique chaque intervalle de temps T1 à T12.

Pour cela, chaque intervalle de temps T1 à T12 est caractérisé par les signes de j tensions caractéristiques de référence. Dans le cas où il existe 12 intervalles de temps, chaque intervalle de temps T1 à T12 peut être caractérisé de manière unique par les signes des six tensions caractéristiques suivantes :
- Le signe des tensions de chacune des phases Va, Vb, Vc de la tension d'entrée alternative;
- Le signe de leurs différences Va-Vb, Va-Vc, Vb-Vc.

Ainsi, par exemple, si on se trouve dans l'intervalle T1, alors Va, Vc, Va-Vb et Vc-Va sont positives et Vb, Vb-Vc sont négatives.

De même, dans l'intervalle T2, alors Va, Va-Vb sont positives, Vb, Vc, Vc-Va sont négatives et Vb-Vc change de signe. On peut faire de même pour chaque intervalle T3 à T12 et ainsi caractériser de manière unique chaque intervalle grâce aux signes des tensions Va, Vb, Vc, Va-Vb, Vb-Vc, Vc-Va.

Chaque intervalle de temps T1 à T12 est donc mémorisé dans une table de référence sous la forme d'une combinaison de référence C1 à C12 qui est caractérisée par les données qu'elle contient. Chaque combinaison de référence C1 à C12 peut donc être identifiée de manière unique grâce aux six signes qu'elle contient.

Par ailleurs, à chaque combinaison de référence C1 à C12 est associé un rapport cyclique ou un temps d'ouverture prédéterminé t1, t2, t3 de chacun des interrupteurs 1 à 3.

Par exemple, à la combinaison C1, on associe :
- un temps d'ouverture prédéterminé t1 de 33% pour l'interrupteur 1, ce qui signifie que l'interrupteur 1 restera ouvert pendant une durée moyenne égale à 33% de T/12 ;
- un temps d'ouverture prédéterminé t2 de 100% pour l'interrupteur 2, ce qui signifie que l'interrupteur 2 restera ouvert pendant une durée moyenne égale à 100% de T/12 ;
- un temps d'ouverture prédéterminé t3 de 66% pour l'interrupteur 3, ce qui signifie que linterrupteur 3 restera ouvert pendant une durée moyenne égale à 66% de T/12.

On définit ainsi pour chaque combinaison de référence C1 à C12 des temps d'ouverture prédéterminés pour les interrupteurs 1 à 3. Ces données sont stockées dans la table de référence.

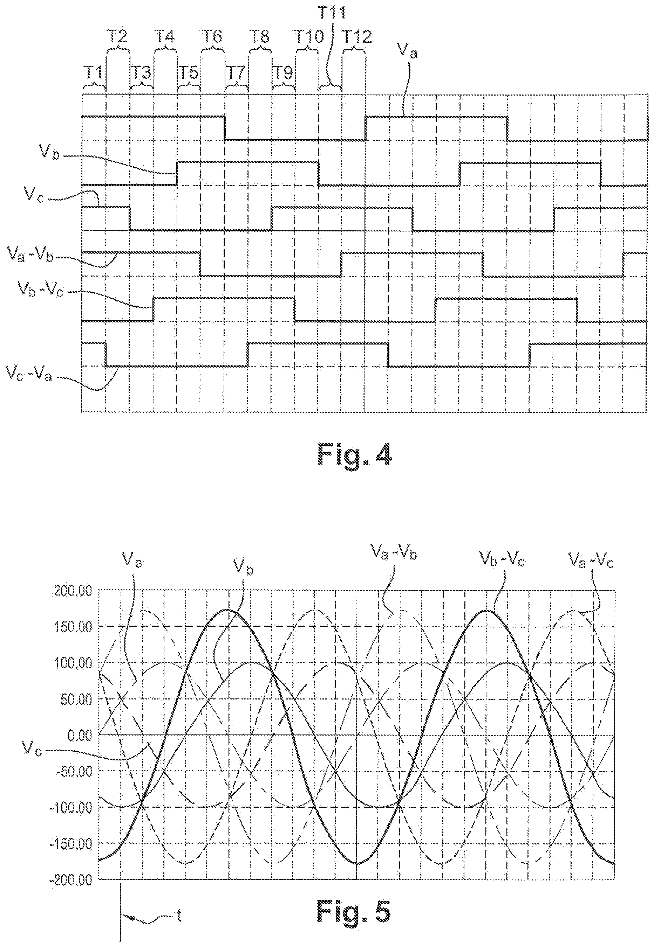

La table de référence ainsi obtenue est représentée schématiquement sur les figures 3 et 4.

Une fois cette table de référence établie, le procédé comporte tout d'abord une étape (a) de détermination des signes de j tensions caractéristiques. La figure 4 représente l'évolution des tensions caractéristiques Va, Vb, Vc, Va-Vb, Vb-Vc, Va-Vc en fonction du temps.

Dans cet exemple, les tensions caractéristiques Va, Vb, Vc, Va-Vb, Vb-Vc, Va-Vc sont donc mesurées à un instant t de façon à ce que le signe de ces tensions puisse être déterminé. Cette mesure du signe des signes de Va, Vb, Vc, Va-Vb, Vb-Vc, Va-Vc est de préférence une mesure de la valeur de Va, Vb, Vc, Va-Vb, Vb-Vc, Va-Vc qui est juste assez précise pour déterminer le signe de chacune de ces tensions. De telles mesures sont bien connues de l'homme du métier.

Le procédé comporte ensuite une étape (b) de détermination d'une combinaison de référence à laquelle correspondent les signes des j tensions caractéristiques par la comparaison des signes de ces j tensions caractéristiques aux données de la table de référence.

Ainsi, si lors de l'étape (a), les signes suivants ont été identifiés pour Va, Vb, Vc, Va-Vb, Vb-Vc, Va-Vc : {+, -, -, +, -, -} alors on sait grâce à la table de référence qu'il s'agit de la combinaison de référence C3, et donc qu'on se trouve dans l'intervalle de temps T3.

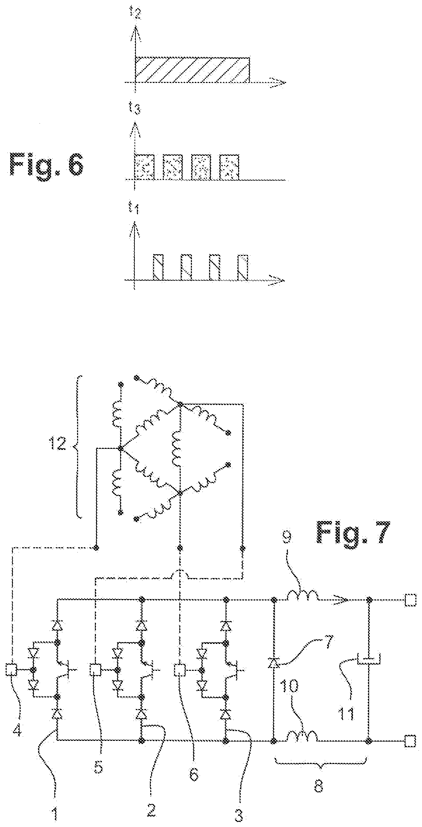

Le procédé comporte alors une étape (c) d'ouverture de chaque interrupteur 1, 2, 3 pendant un temps d'ouverture prédéterminé t1, t2, t3 en fonction de la combinaison de référence C3 identifiée lors de l'étape (b). Plus précisément, à la combinaison de référence C3, les temps d'ouverture suivants sont associés: {t1=100% de T/12, t2=66% de T/12, t3=33% de T/12}. Ceci correspond à la figure 6.

La figure 6 représente schématiquement ces temps d'ouverture t1 à t3 appliqués pendant l'intervalle de temps T1.

Ainsi, à chaque combinaison C1 à C12, est associé un ensemble de rapports cycliques d'ouverture des interrupteurs 1 à 3 ce qui permet de simplifier le procédé de commande par rapport aux procédés de l'art antérieur.

Le trio de rapports cycliques {33%, 66%, 100%} a été proposé car le fait de disposer du rapport cyclique 100% dans le trio permet une optimisation des pertes dues au hachage. Les interrupteurs qui voient ce rapport cyclique 100% conduisent en permanence durant la tranche de temps.

Par « rapport cyclique », on entend le principe de hacher à une fréquence élevée les grandeurs électriques à l'aide des interrupteurs afin de réaliser le réglage désiré au sens « moyen » du terme.

Un procédé de commande selon un autre mode de réalisation va maintenant être décrit en référence aux figures 7 à 10. Ce procédé de commande utilise un découpage d'une période T de la tension d'entrée en 18 intervalles de temps T1 à T18 et non plus en 12 intervalles de temps comme décrit en référence aux figures 1 à 6.

Un convertisseur auquel peut s'appliquer ce procédé de commande est représenté sur la figure 7. Ce convertisseur peut être identique à celui représenté sur la figure 1, mais il comporte en outre de préférence des moyens de génération 12 de tensions caractéristiques.

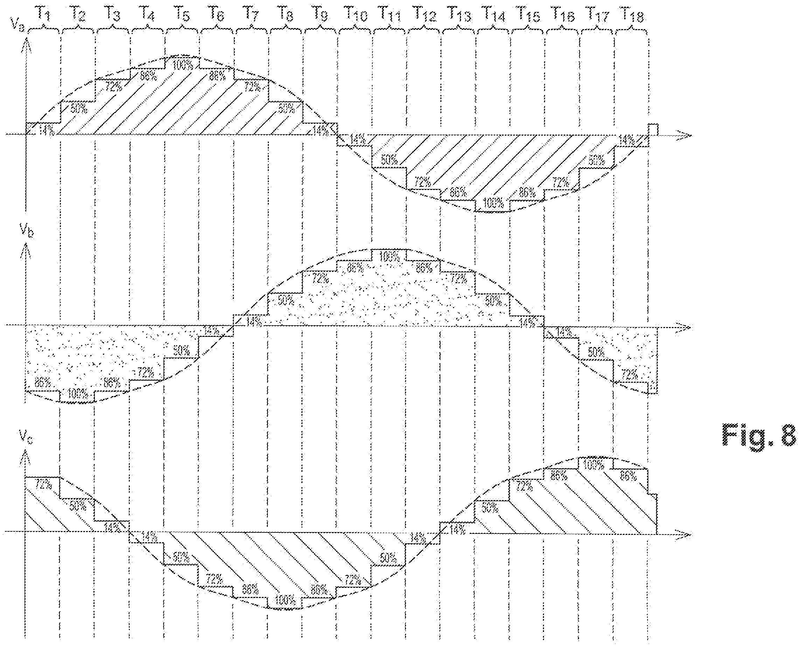

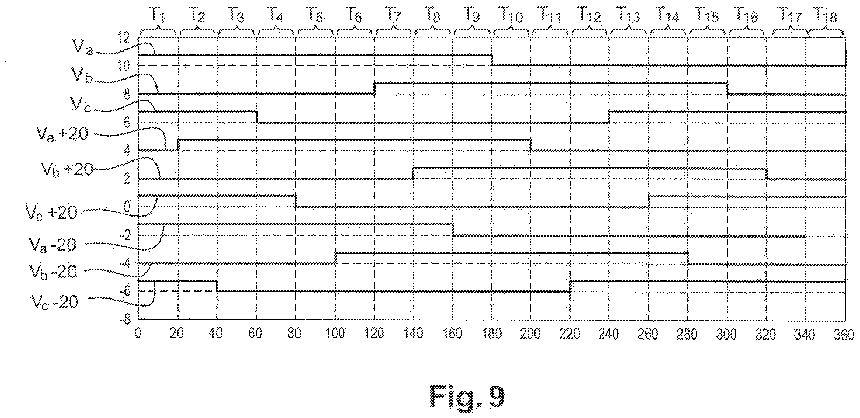

Comme expliqué précédemment, une table de référence est tout d'abord réalisée. Cette table de référence est représentée schématiquement sur les figures 8 et 9.

Pour cela, les tensions des trois phases de la tension d'alternative d'entrée sont tout d'abord enregistrées pendant une période comme représenté sur la figure 8. Le gabarit ainsi réalisé est divisé en 18 intervalles de temps T1 à T18. Ces intervalles de temps T1 à T18 présentent de préférence une durée égale.

Comme expliqué précédemment, chaque intervalle de temps T1 à T18 doit pouvoir être caractérisé de manière unique par une combinaison de signes de j tensions caractéristiques.

Dans ce mode de réalisation, on choisit pour cela les signes des neuf tensions caractéristiques suivantes :
- les tensions de chacune des phases de la tension d'entrée alternative Va, Vb, Vc;
- les tensions de chacune des phases de la tension d'entrée alternative déphasées de +20° :Va+20°, Vb+20°, Vc+20° ;
- les tensions de chacune des phases de la tension d'entrée alternative déphasées de -20° :Va-20°, Vb-20°, Vc-20°.

Comme illustré sur la figure 9, les signes de ces neuf tensions caractéristiques permettent de discriminer les 18 intervalles de temps T1 à T18, puisque chaque intervalle de temps est caractérisé par une combinaison unique de ces 9 signes de référence.

Pour fournir les tensions Va+20°, Vb+20°, Vc+20°, Va-20°, Vb-20°, Vc-20°, le convertisseur de commande comporte de préférence des moyens de génération 12 de tensions caractéristiques. Ces moyens de génération 12 fournissent des signaux « image » du réseau électrique décalés dans le temps (avancé et retardé). Si l'on représente vectoriellement le réseau électrique, on obtient pour chaque tension simple (Va, Vb, Vc) une tension décalée de +20° et -20°. Le montage proposé pour réaliser cette fonction de passer de {Va, Vb, Vc} à {Va, Vb, Vc, Va+20, Vb+20, Vc+20, Va-20, Vb-20, Vc-20 }) est par exemple un autotransformateur de signal. Il s'agit d'un élément électromagnétique qui comporte trois barreaux et neuf bobinages.

Chaque intervalle de temps T1 à T18 est donc représenté dans la table de référence par une combinaison de référence C1 à C18 qui est caractérisée par les neufs signes qu'elle contient.

Par ailleurs, la table de référence contient également des rapports cycliques ou des durées d'ouverture de chaque interrupteur 1, 2, 3 qui sont prédéterminés et à associé à chaque combinaison C1 à C18 de la table de référence.

Dans cet exemple, on choisit par exemple les rapports cycliques suivants {14%, 86%, 72%} pour la combinaison de référence C1 et des trios de rapports cycliques pris dans l'ensemble suivants {14%, 50%, 72%, 86%, 100%} pour les autres combinaisons de référence. Toutefois, de tels rapports cycliques ne sont cités qu'à titre d'exemple et l'homme du métier saurait aisément adapté le procédé selon l'invention à d'autres rapports cycliques.

Une fois la table de référence ainsi réalisée, le procédé comporte, comme dans le mode de réalisation précédent, les étapes suivantes :
La procédure à suivre pour faire fonctionner le convertisseur
- on mesure les tensions caractéristiques Va, Vb, Vc, Va+20°, Vb+20°, Vc+20°, Va-20°, Vb-20°, Vc-20° de façon juste assez précise pour identifier leurs signes ; l'évolution de ces tensions en fonction du temps est représentée sur la figure 10 ;
- on détermine les signes de ces tensions ;
- on identifie à quelle combinaison C1 à C18 ces neufs signes de tensions correspondent, et on sait dons dans quel intervalle de temps on se trouve ;
- on applique les rapports cycliques prédéterminés aux interrupteurs.

Le procédé selon l'invention est particulièrement avantageux car il est beaucoup plus simple que ceux de l'art antérieur puisque :
- il ne nécessite pas une grande précision sur les grandeurs à mesurer puisqu'on exploite les signes des tensions du réseau électriques au lieu de l'évolution des amplitudes en fonction du temps ;
- il ne nécessite plus de mesurer de paramètres relatifs à la tension de sortie ni les courants de la tension d'entrée ;
- elle ne nécessite plus de boucle de régulation.

Par ailleurs, l'invention pourrait s'appliquer à d'autres convertisseurs que ceux décrits en référence aux figures.

## Revendications

1. Procédé de commande d'un convertisseur d'une tension d'entrée alternative à n phases en une tension de sortie continue, avec n > 3, chaque phase de la tension d'entrée alternative étant reliée à un interrupteur (1, 2, 3) du convertisseur, le procédé comportant les étapes suivantes :
- (a) Une étape de détermination des signes de j tensions caractéristiques (Va, Vb, Vc, Va-Vb, Vb-Vc, Va-Vc, Va+20°, Vb+20°, Vc+20°, Va-20°, Vb-20°, Vc-20°) ;
- (b) Une étape de détermination d'une combinaison de référence (C1-C12, C1-C18), à laquelle correspondent les signes des j tensions caractéristiques (Va, Vb, Vc, Va-Vb, Vb-Vc, Va-Vc, Va+20°, Vb+20°, Vc+20°, Va-20°, Vb-20°, Vc-20°) par la comparaison des signes de ces j tensions caractéristiques aux données d'une table de référence, ladite table de référence comprenant un nombre i de combinaisons de référence (C1-C12, C1-C18) différentes, chaque combinaison de référence étant représentative d'un intervalle de temps (T1-T12) correspondant à une fraction d'une période de la tension d'entrée alternative, le nombre i étant un multiple du nombre de phases n de la tension d'entrée alternative, en outre les j tensions caractéristiques (Va, Vb, Vc, Va-Vb, Vb-Vc, Va-Vc, Va+20°, Vb+20°, Vc+20°, Va-20°, Vb-20°, Vc-20°) comprenant un premier ensemble de tensions d'entrée alternatives (Va, Vb, Vc) et un second ensemble de tension caractéristiques (Va-Vb, Vb-Vc, Va-Vc, Va+20°, Vb+20°, Vc+20°, Va-20°, Vb-20°, Vc-20°), chacune des tensions caractéristiques (Va-Vb, Vb-Vc, Va-Vc, Va+20°, Vb+20°, Vc+20°, Va-20°, Vb-20°, Vc-20°) de ce second ensemble étant obtenue soit en effectuant une différence de tensions d'entrée (Va, Vb, Vc), soit en effectuant un déphasage de +20° et -20° d'une tension d'entrée (Va, Vb, Vc) ;
- (c) Une étape d'ouverture de chaque interrupteur pendant un temps d'ouverture prédéterminé (t1, t2, t3) en fonction de la combinaison de référence (C1-C12, C1-C18) identifiée lors de l'étape (b).

2. Procédé de commande selon la revendication 1, dans lequel j est égal à i/2.

3. Procédé de commande selon la revendication 2, dans lequel i est égal à 12.

4. Procédé de commande selon la revendication 2, dans lequel i est égal à 18.

5. Procédé de commande selon la revendication 3, dans lequel lors de l'étape (a), les six signes suivants sont déterminés :
- le signe de la tension (Va, Vb, Vc) de chacune des phases ;
- le signe des différences entre deux des tensions des phases (Va-Vb, Va-Vc, Vb-Vc).

6. Procédé de commande selon la revendication 4, dans lequel lors de l'étape (a), les neuf signes suivants sont déterminés :
- le signe de la tension de chacune des phases (Va, Vb, Vc);
- le signe de la tension de chacune des phases déphasée de +20° (Va+20°, Vb+20°, Vc+20°) ;
- le signe de la tension de chacune des phases déphasée de -20° (Va-20°, Vb-20°, Vc-20°).

7. Procédé selon l'une des revendications précédentes, dans lequel chaque combinaison de référence (C1-C12, C1-C18) est représentative d'un intervalle de temps (T1-T12, T1-T18).

8. Procédé selon la revendication précédente, dans lequel chaque intervalle de temps (T1-T12, T1-T18) correspond à une fraction de la période de la tension d'entrée alternative.

## Patentansprüche

1. Steuerverfahren eines Umsetzers einer Eingangs-Wechselspannung mit n Phasen in eine Ausgangs-Gleichspannung, wobei n > 3 ist, wobei jede Phase der Eingangs-Wechselspannung an einen Schalter (1, 2, 3) des Umsetzers angeschlossen ist, wobei das Verfahren die folgenden Schritte umfasst:
- (a) einen Bestimmungsschritt der Zeichen von j charakteristischen Spannungen (Va, Vb, Vc, Va-Vb, Vb-Vc, Va-Vc, Va+20°, Vb+20°, Vc+20°, Va-20°, Vb-20°, Vc-20°);
- (b) einen Bestimmungsschritt einer Referenzkombination (C1-C12, C1-C18), der die Zeichen der j charakteristischen Spannungen entsprechen (Va, Vb, Vc, Va-Vb, Vb-Vc, Va-Vc, Va+20°, Vb+20°, Vc+20°, Va-20°, Vb-20°, Vc-20°) durch den Vergleich der Zeichen dieser j charakteristischen Spannungen mit den Daten einer Referenztabelle, wobei die genannte Referenztabelle eine Anzahl i von unterschiedlichen Referenzkombinationen (C1-C12, C1-C18) umfasst, wobei jede Referenzkombination für ein Zeitintervall (T1-T12) repräsentativ ist, das einem Bruchteil einer Periode der Eingangs-Wechselspannung entspricht, wobei die Anzahl i ein Vielfaches der Phasenanzahl n der Eingangs-Wechselspannung ist, wobei die j charakteristischen Spannungen (Va, Vb, Vc, Va-Vb, Vb-Vc, Va-Vc, Va+20°, Vb+20°, Vc+20°, Va-20°, Vb-20°, Vc-20°) darüber hinaus eine erste Gruppe von Eingangs-Wechselspannungen (Va, Vb, Vc) und eine zweite Gruppe von charakteristischen Spannungen (Va-Vb, Vb-Vc, Va-Vc, Va+20°, Vb+20°, Vc+20°, Va-20°, Vb-20°, Vc-20°) umfasst, wobei jede der charakteristischen Spannungen (Va-Vb, Vb-Vc, Va-Vc, Va+20°, Vb+20°, Vc+20°, Va-20°, Vb-20°, Vc-20°) dieser zweiten Gruppe entweder per Durchführung einer Differenz der Eingangsspannungen (Va, Vb, Vc) oder per Durchführung einer Phasenverschiebung von +20° und -20° einer Eingangsspannung (Va, Vb, Vc) erhalten ist;
- (c) einen Öffnungsschritt jedes Schalters während einer vorbestimmten Öffnungszeit (t1, t2, t3) in Abhängigkeit von der Referenzverbindung (C1-C12, C1-C18), die bei dem Schritt (b) identifiziert ist.

2. Steuerverfahren gemäß Anspruch 1, bei dem j gleich i/2 ist.

3. Steuerverfahren gemäß Anspruch 2, bei dem i gleich 12 ist.

4. Steuerverfahren gemäß Anspruch 2, bei dem i gleich 18 ist.

5. Steuerverfahren gemäß Anspruch 3, bei dem beim Schritt (a) die sechs folgenden Zeichen bestimmt sind:
- das Zeichen der Spannung (Va, Vb, Vc) jeder der Phasen;
- das Zeichen der Differenzen zwischen zwei Spannungen der Phasen (Va-Vb, Va-Vc, Vb-Vc).

6. Steuerverfahren gemäß Anspruch 4, bei dem beim Schritt (a) die neun folgenden Zeichen bestimmt sind:
- das Zeichen der Spannung jeder der Phasen (Va, Vb, Vc);
- das Zeichen der Spannung jeder der um +20° phasenverschobenen Phasen (Va+20°, Vb+20°, Vc+20°);
- das Zeichen der Spannung jeder der um -20° phasenverschobenen Phasen (Va-20°, Vb-20°, Vc-20°).

7. Verfahren gemäß einem der voranstehenden Ansprüche, bei dem jede Referenzkombination (C1-C12, C1-C18) für ein Zeitintervall (T1-T12, T1-18) repräsentativ ist.

8. Verfahren gemäß dem voranstehenden Anspruch, bei dem jedes Zeitintervall (T1-T12, T1-18) einem Bruchteil der Periode der Eingangs-Wechselspannung entspricht.

## Claims

1. A method for controlling a converter from an n-phase AC input voltage to a DC output voltage, each phase of the AC input voltage being connected to a switch (1, 2, 3) of the converter, the method including the following steps:
- (a) a step of determining the signs of j characteristic voltages (Va, Vb, Vc, Va-Vb, Vb-Vc, Va-Vc, Va+20°, Vb+20°, Vc+20°, Va-20°, Vb-20°, Vc-20°);
- (b) a step of determining a reference combination (C1-C12, C1-C18) to which the signs of the j characteristic voltages (Va, Vb, Vc, Va-Vb, Vb-Vc, Va-Vc, Va+20°, Vb+20°, Vc+20°, Va-20°, Vb-20°, Vc-20°) correspond by comparing the signs of these j characteristic voltages to data from a reference table, said reference table comprising a number i of different reference combinations (C1-C12, C1-C18), each reference combination being representative of a fraction of a period of the AC input voltage, the number i being a multiple of the number n of phases of the AC input voltage, further, the j characteristic voltages (Va, Vb, Vc, Va-Vb, Vb-Vc, Va-Vc, Va+20°, Vb+20°, Vc+20°, Va-20°, Vb-20°, Vc-20°) comprising a first set of AC input voltages (Va, Vb, Vc) and a second set of characteristic voltages (Va-Vb, Vb-Vc, Va-Vc, Va+20°, Vb+20°, Vc+20°, Va-20°, Vb-20°, Vc-20°), each of the characteristic voltages (Va-Vb, Vb-Vc, Va-Vc, Va+20°, Vb+20°, Vc+20°, Va-20°, Vb-20°, Vc-20°) of this second set being obtained by either carrying out a difference of input voltages (Va, Vb, Vc), or carrying out a +20° and -20° phase shift of an input voltage (Va, Vb, Vc);
- (c) a step of opening each switch for a predetermined opening time (t1, t2, t3) according to the reference combination (C1-C12, C1-C18) identified during step (b).

2. The controlling method according to claim 1, wherein j is i/2.

3. The controlling method according to claim 2, wherein i is 12.

4. The controlling method according to claim 2, wherein i is 18.

5. The controlling method according to claim 3, wherein during step (a), the six following signs are determined:
- the sign of the voltage (Va, Vb, Vc) of each of the phases;
- the sign of the differences between two of the voltages of the phases (Va-Vb, Va-Vc, Vb-Vc).

6. The controlling method according to claim 4, wherein during step (a), the nine following signs are determined:
- the sign of the voltage of each of the phases (Va, Vb, Vc);
- the sign of the voltage of each of the phases being phase-shifted of +20° (Va+20°, Vb+20°, Vc+20°);
- the sign of the voltage of each of the phases being phase-shifted of -20° (Va-20°, Vb-20°, Vc-20°).

7. The method according to one of the preceding claims, wherein each reference combination (C1-C12, C1-C18) is representative of a time interval (T1-T12, T1-T18).

8. The method according to the preceding claim, wherein each time interval (T1-T12, T1-T18) corresponds to a fraction of the period of the AC input voltage.
